(19)

Europäisches Patentamt
European Patent Office
Office européen des brevets

(11)  **EP 3 771 549 A1**

(12)  **EUROPEAN PATENT APPLICATION**

(43) Date of publication:
03.02.2021 Bulletin 2021/05

(51) Int Cl.:
*B29C 64/153* (2017.01)    *B29C 64/268* (2017.01)
*B33Y 70/00* (2020.01)    *C08G 63/672* (2006.01)

(21) Application number: **20187835.2**

(22) Date of filing: **27.07.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2019 JP 2019138640**

(71) Applicant: **Ricoh Company, Ltd.
Tokyo 143-8555 (JP)**

(72) Inventors:
• OGAWA, Satoshi
Tokyo, 143-8555 (JP)
• IWATSUKI, Hitoshi
Tokyo, 143-8555 (JP)
• NARUSE, Mitsuru
Tokyo, 143-8555 (JP)
• SUN, Yunsheng
Tokyo, 143-8555 (JP)

(74) Representative: **SSM Sandmair
Patentanwälte Rechtsanwalt
Partnerschaft mbB
Joseph-Wild-Straße 20
81829 München (DE)**

(54)  **RESIN POWDER FOR SOLID FREEFORM FABRICATION, METHOD OF MANUFACTURING RESIN POWDER FOR SOLID FREEFORM FABRICATION, AND METHOD OF MANUFACTURING SOLID FREEFORM FABRICATION OBJECT**

(57)  A resin powder for solid freeform fabrication contains polyester-based resin particles comprising a polyester-based resin having a structural unit derived from polytetramethylene glycol, wherein the polyester-based resin particles have a melting point Tm higher than 215 degrees C and equal to or lower than 250 degrees C.

## FIG. 1

**Description**

BACKGROUND

Technical Field

The present disclosure relates to a resin powder for solid freeform fabrication, a method of manufacturing a resin powder for solid freeform fabrication, and a method of manufacturing a solid freeform fabrication object.

Description of the Related Art

A powder bed fusion (PBF) method is a method of manufacturing a solid freeform fabrication object (three-dimensional object). The PBF method includes a selective laser sintering (SLS) method by which a solid freeform fabrication object is formed by selective irradiation of laser beams and a selective mask sintering (SMS) method in which laser beams are applied in a planar manner using a mask.

The resin powder for use in manufacturing a solid freeform fabrication object with these methods includes polyester-based resins such as polybutylene terephthalate, which has good insulation property and a high melting point.

A polybutylene terephthalate resin having a higher crystallization temperature than a homopolybutylene terephthalate resin has been proposed as a resin powder material for use in powder additive manufacturing methods in JP-6033994-B1 (PCT/JP2015/052254). The polybutylene terephthalate resin has a melting point of from 200 to 215 degrees C and is a copolymer having a polytetramethylene glycol as a monomer.

However, when a polyester-based resin is used as the resin constituting resin particles contained in the resin powder for solid freeform fabrication, the tensile strength and tensile strain of a solid freeform fabrication object formed with the resin powder for solid freeform fabrication are not sufficient upon application of tension to the solid freeform fabrication object.

Moreover, a solid freeform fabrication object formed has a problem with surface property such as a rough or coarse surface.

Furthermore, a solid freeform fabrication object formed is deflected causing deformation when the solid freeform fabrication object is heated and load is applied thereto.

SUMMARY

According to the present disclosure, a resin powder for solid freeform fabrication is provided with which a solid freeform fabrication object having excellent tensile strength, tensile strain, and surface property and capable of reducing deflection can be formed.

According to embodiments of the present disclosure, provided is a resin powder for solid freeform fabrication which contains polyester-based resin particles comprising a polyester-based resin having a structural unit derived from polytetramethylene glycol, wherein the polyester-based resin particles have a melting point Tm higher than 215 degrees C and equal to or lower than 250 degrees C.

As another aspect of embodiments of the present disclosure, a method of manufacturing a resin powder for solid freeform fabrication is provided which includes pulverizing a polyester-based resin having a structural unit derived from polytetramethylene glycol to form polyester-based resin particles, wherein the polyester-based resin particles have a melting point Tm higher than 215 degrees C and equal to or lower than 250 degrees C.

As another aspect of embodiments of the present disclosure, a method of manufacturing a solid freeform fabrication object is provided which includes forming a layer containing a resin powder by moving the resin powder by a layer forming device, melting the layer with electromagnetic radiation, and repeating the forming and the melting, wherein the resin powder contains polyester-based resin particles containing a polyester-based resin having a structural unit derived from polytetramethylene glycol, wherein the polyester-based resin particles have a melting point Tm higher than 215 degrees C and equal to or lower than 250 degrees C.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a schematic diagram illustrating an example of the device for fabricating a solid freeform fabrication object; and

FIG. 2 is a flowchart illustrating an example of the method of fabricating a solid freeform fabrication object.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Next, an embodiment of the present disclosure is described.

Resin Powder for Solid Freeform Fabrication

The resin powder for solid freeform fabrication of the present embodiment contains resin particles and other optional additives such as a toughening agent, a flame retardant, a plasticizer, a stabilizer, an antioxidant, a crystal nucleating agent, and fluidizer. These resin particles and additives can be used alone or in combination.

The resin particles include polyester-based resin particles and other optional resin particles. The polyester-based resin particle contains a polyester-based resin as all or part of the materials constituting the resin particles and other optional resins and materials. The polyester-based resin particle is preferably the main component and more preferably all of the materials constituting resin particles.

The method of adding additives is not particularly limited and includes, but is not limited to, a method of adding an additive separately from resin particles, a method of enclosing an additive in resin particles, and a method of attaching an adhesive to the surface of resin particles.

"For solid freeform fabrication" means that resin powder is used in a powder additive manufacturing. Powder additive manufacturing is a fabrication method of solidifying layer by layer upon application of laser beams or binder to a powder material. Of these, the resin powder for solid freeform fabrication of the present embodiment is preferably applied to selective laser sintering (SLS) method by which powder is selectively irradiated with laser beams to form a solid freeform fabrication object.

Polyester-based Resin Particle

The polyester-based resin particle constituting the resin particle is not particularly limited. Specific examples include, but are not limited to, polyethylene terephthalate resins, polytrimethylene terephthalate resins, polybutylene terephthalate resins, polyethylene naphthalate resins, and polybutylene naphthalate resins. Of these, polybutylene terephthalate resins (herein after also referred to as PBT resin) are preferable in terms of thermal stability, dimension accuracy, and electric properties.

The resin particle has a melting point Tm of from higher than 215 degrees C to equal to or lower than 250 degrees C. The melting point Tm is preferably 215.1 degrees C or higher and more preferably 215.4 degrees C or higher. The melting point Tm is preferably 240.0 degrees C or lower, more preferably 230.0 degrees C or lower, and furthermore preferably 227.1 degrees C or lower. The melting point Tm surpasses 215 degrees C, which is preferable because it is within the heat resistance temperature for the exterior of a product. When the melting point Tm is 250 degrees C or lower, the strength of a solid freeform fabrication object enhances because the resin particle sufficiently melts during fabrication.

There is no particular limit to a method of manufacturing the resin particles having a melting point Tm of from higher than 215 degrees C to equal to or lower than 250 degrees C. One way to manufacture such resin particles is to use a monomer such as polytetramethylene glycol, isophthalic acid, and others as polymerization materials for a polyester-based resin to degrade crystallinity of the resin particles and lower the melting point thereof. Another way is to enhance crystallinity of resin particles by annealing to raise the melting point. It is also possible to combine these methods. When a resin containing a crystal nucleating agent is subjected to annealing, crystallinity is more enhanced, which raises the melting point as a result.

The resin particle preferably has a crystallization temperature Tc of from 150 to 195 degrees C and from 174.3 to 194.2 degree C. When the crystallization temperature Tc is from 150 to 195 degrees C, a solid freeform fabrication object can be fabricated at not high temperatures. The damage to the material during fabrication is reduced accordingly.

There is no particular limit to the method of manufacturing the resin particles having a crystallization temperature Tc of from 150 to 195 degrees C. One way to manufacture such a resin is to control the crystallization temperature Tc in the same manner as for the melting point Tm.

The melting point Tm and the crystallization temperature Tc are measured by a differential scanning calorimeter. One such a differential scanning calorimeter is Discovery DSC 25P (manufactured by TA Instruments). The Tm and the Tc are measured according to ISO 3146 regulation and the measuring conditions are as follows. The measuring from 50 to 250 degrees C is defined as the 1st run and, from 250 to 50 degrees C, temperature falling measuring run in the present disclosure. The endothermic peak temperature in the DSC curve of the 1st run obtained by the measuring is defined as the Tm and the exothermic peak temperature in the DSC curve of the temperature falling measuring run obtained by the measuring is defined as the crystallization temperature Tc. When there are multiple melting points Tm, the melting point on the high temperature side is adopted. The endothermic peak temperature and the exothermic peak temperature are determined by using software such as analysis software (TA Universal analysis).

Measuring Conditions

- Starting Temperature: 50 degrees C
- Heating speed: 10 degrees C/min
- Ending temperature: 250 degrees C
- Rate of temperature falling: 10 degrees C/min
- Ending temperature: 50 degrees C

The gradient of a tangent to a curve that forms the crystallization temperature peak and is on the higher temperature side than the crystallization temperature Tc is from -0.31 to -0.18 W/g•degrees C and preferably from -0.30 to -0.20 W/g•degrees C in the differential scanning calorimetry curve of the temperature falling measuring run obtained during measuring the melting point Tm and the crystallization temperature Tc. When the gradient of the tangent is -0.30 W/g•degrees C or higher, the crystallization speed does not increase excessively, so that a solid freeform fabrication object is prevented from warping and the surface property is enhanced. When the gradient of the tangent is -0.20 W/g•degrees C or less, the crystallization speed increases, which enhances the degree of crystallization. The tension strength of a solid freeform fabrication object is enhanced as a result.

The gradient of the tangent in the present disclosure is calculated by using an analysis software TA Universal Analysis of TA Instruments. "Integral Peak liner" is selected in the analysis mode and the temperature is selected in the range of from 30 degrees C lower than the crystallization temperature to 30 degrees C higher than the crystallization temperature during temperature falling. The tangent is automatically drawn by these settings. The gradient of the tangent is calculated by selecting three points on the tangent by the analysis software and the coordinate (temperature corresponding to X axis and HEAT FLOW corresponding to Y axis) for each point is manually displayed to calculate the gradient of the tangent based on these coordinates.

The polyester-based resin constituting the resin particle is synthesized from polymerization materials such as a monomer as the alcohol component and a monomer as the acid component as the polymerization material.

Polytetraethylene glycol is used as the monomer of the alcohol component. In other words, the polyester-based resin has a structural unit derived from polytetramethylene glycol. It is possible to readily control the melting point Tm of resin particles in the range of from higher than 215 degrees C to equal to or lower than 250 degrees C due to the inclusion of this structural unit derived from polytetramethylene glycol. The structural unit derived from polytetramethylene glycol serves as a soft segment and imparts impact resilience to the polyester-based resin. It also imparts flexibility, wear resistance, and tear resistance at low temperatures. Polytetramethylene glycol is not particularly limited and can be procured or synthesized. Specific examples of the procured polytetramethylene glycol include, but are not limited to, PTMG650, PTMG1000, PTMG2000, and PTMG3000 (all manufactured by Mitsubishi Engineering-Plastics Corporation).

Specific examples of the monomer as the alcohol component other than polytetramethylene glycol include, but are not limited to, 1,4-propane diol, diethylene glycol, polyethylene glycol, polypropylene glycol, and polytetramethylene glycol. In other words, the polyester-based resin may have a structural unit derived from these alcohols.

The monomer as the acid component is not particularly limited. It is preferable to use acids such as isophthalic acid, phthalic acid, 4,4'-diphenyl ether dicarboxylic acid, 5-sodium sulfo isophthalic acid, 2,6-naphthalene carboxylic acid, azelaic acid, adipic acid, sebacic acid, 1,3-cyclohexane dicarboxylic acid, 1,4-cyclohexane dicarboxylic acid, and dimer acid. Of these, isophthalic acid is more preferable. In other words, the polyester-based resin preferably has a structural unit derived from these acids. In particular, the structural unit derived from isophthalic acid enhances tensile strength of a solid freeform fabrication object fabricated. This is because the behavior of the molecule of isophthalic acid is restricted while the coordination of carboxylic acid in isophthalic acid is not linear in comparison with terephthalic acid and the crystallinity of isophthalic acid deteriorates.

Note that when a PBT resin is used as the polyester-based resin, the PBT resin mainly has a structural unit derived from terephthalic acid and a structural unit derived from 1,4-propane diol units and also contains a structural unit derived from polytetramethylene glycol to control the melting point and the crystallization speed of the PBT resin.

The proportion of the structural unit derived from polytetramethylene glycol in the total content of the structural units constituting the polyester-based resin is preferably from 1.0 to 20.0 mol percent. Providing a proportion of the structural unit derived from polytetramethylene glycol of 1.0 mol percent or greater prevents crystallinity of the polyester-based resin from increasing, which prevents the solid freeform fabrication object produced from warping. Providing a proportion of the structural unit derived from polytetramethylene glycol of 20.0 mol percent or less prevents the melting point of the resin particles from lowering, which enhances the heat resistance of the solid freeform fabrication objects produced, thereby improving the tensile strength.

The proportion of the structural unit derived from isophthalic acid in the total content of the structural units constituting the polyester-based resin is preferably from 1.0 to 20.0 mol percent. Providing a proportion of the structural unit derived from isophthalic acid within the range prevents the solid freeform fabrication objects produced from warping and enhances the heat resistance of the solid freeform fabrication objects produced, thereby improving the tensile strength.

The proportion of the polyester-based resin particle in the total content of the resin powder for solid freeform fabrication is preferably 90.0 percent by mass or greater, more preferably 95.0 percent by mass or greater, furthermore preferably 99.0 percent by mass or greater, and particularly preferably 99.5 percent by mass or greater.

Form of Resin Particle

The form of the polyester-based resin particles is not particularly limited and includes an irregular form without unity in size and form obtained by pulverizing or shearing resins and a substantially columnar form obtained through a particular process. Of these, columnar forms are preferable.

The resin particle having a substantially columnar form has a pillar-like or tubular form having a base and top surface. The substantially columnar form includes, for example, a substantially cylindrical form and a substantially polygonal form. The forms of the base and the top surface are not particularly limited and can be suitably selected to suit to the particular application. Resin particles having a circular or ellipsoidal base and top surface are substantially cylindrical. Resin particles having a polygonal such as quadrilateral or hexagon base and top are substantially polygonal prism. As long as the portion between a base and an upper surface has a pillar-like form or a tubular form, the form of the base and the form of the upper surface are not necessarily the same. The form may be a straight solid in which the pillar portion (side surface) is orthogonal to the base or the upper surface or a slanted solid in which the side surface is not orthogonal to the base or the upper surface.

Because the form of the resin particle is substantially columnar, powder obtained has a small repose angle and a high level of smoothness of the layer formed after recoating. The surface property of the solid freeform fabrication objects produced can be furthermore enhanced as a result. The substantially columnar form is preferably a straight solid having a base and a top surface substantially parallel to each other in terms of productivity and stability of fabrication. Resin particles having a substantially columnar form can be observed with an instrument such as a scanning electron microscope (S4200, manufactured by Hitachi Ltd.) or a wet-process particle size and form analyzer (FPIA-3000, manufactured by Sysmex Corporation) to determine the form.

Of the substantially columnar forms, substantially cylindrical forms are preferable. If resin particles have substantially cylindrical forms, the resin particles are readily closest-packed when a solid freeform fabrication object is manufactured, which enhances the strength of the solid freeform fabrication object obtained.

The particle diameter of the polyester-based resin particle is not particularly limited. The average circle equivalent diameter, which is a factor of the particle diameter, is preferably from 10 to 150 $\mu$m. The average circle equivalent diameter can be obtained by calculating the number-based average of the circle equivalent diameters obtained from the following relationship.

$$\text{Circle equivalent diameter} = \text{positive square root of } \{4 \times (\text{projected area of resin particle}) / \pi\}$$

Method of Manufacturing Resin Particle

One way to obtain resin particles having substantially columnar forms is to fibrerize a polyester-based resin, cut the fiberized resin materials, and optionally anneal the cut materials to enhance crystallinity. Resin particles having substantially columnar forms can be also manufactured from resins having film-like forms in addition to such a processing method. Resin particles having a substantially cylindrical form may be manufactured by subjecting resin particles having a substantially columnar form to post-processes.

One way to fiberize resins is to draw a molten resin into a fibrous form using an extruder during stirring at temperatures 30 degrees C or higher than the melting point. It is preferable to draw the molten resin to about 1:1 to about 1:10 to obtain the fiber. The form of the top surface and base of the columnar form particle manufactured is determined by the nozzle form of an extruder. For example, if the form of the top surface and base of a column, i.e., the cross section of a fiber, is circular, a circular nozzle is used. For a polygonal form, the nozzle is selected in accordance with the form. It is preferable that the dimension accuracy of a solid freeform fabrication object be higher. The circular form of an end surface is at least 10 percent or less regarding radius difference. It is preferable to have more nozzles to enhance productivity. The polyester-based resin is drawn in the fiberization so as to be crystalline-oriented. The crystallization speed of a resin powder for solid freeform fabrication can be controlled in a suitable range due to the crystalline orientation. The temperature range in which a solid freeform fabrication object can be fabricated can be extended accordingly.

In the cutting, fibrous materials made of a polyester-based resin manufactured by the fiberization are cut (severed) by air or a cutting tool such as an edge tool to manufacture resin particles having a substantially columnar form. The cutting tool is not particularly limited. It is suitable to use a known device such as a cutting machine employing a guillotine method using a pair of an upper blade and a lower blade or a cutting machine employing a straw cutter method of cutting with a pair of an upper blade and a board placed on the bottom. It is also preferable to use a known device such as a device for directly cutting fibrous materials to a size of from 0.005 to 0.2 mm or a device using a $CO_2$ laser. Resin particles having a substantially columnar form can be obtained by such methods.

It is preferable to pulverize resin pellets to obtain resin particles having an irregular form and other processes. To be specific, resin particles having an irregular form are obtained by mechanically pulverizing polyester-based resin pellets using a known pulverizer and classifying the obtained resin powder to remove resin particles having particle diameters outside the target. The temperature during the pulverization is preferably 0 degrees C or lower (lower than the brittle temperature of each resin), more preferably -25 degrees C or lower, and particularly preferably -100 degrees C or lower to enhance pulverization efficiency.

Property of Resin Powder for Solid Freeform Fabrication

A test specimen according to ISO 3167 Type 1A regulation is manufactured with the resin powder for solid freeform fabrication by injection molding preferably has a tensile modulus of elasticity of from 300 to 2,000 MPa and more preferably from 700 to 1,600 MPa at 25 degrees C. Providing a tensile modulus of elasticity of 300 MPa or greater prevents deformation of a solid freeform fabrication object produced, which prevents excessive strain. Providing a tensile modulus of elasticity of 2,000 MPa or less prevents a solid freeform fabrication object produced from being excessively stiff. The solid freeform fabrication object is manufactured by injection molding with a hand truder (manufactured by TOYO SEIKI KOGYO CO. LTD.) using a die that is capable of forming a test specimen according to ISO 3167 Type 1A. The tensile modulus of elasticity can be measured by using a tension tester (AGS-5kN, manufactured by Shimadzu Corporation) according to ISO 527 regulation. The test speed in tensile testing is 50 mm/min. The tensile testing of a solid freeform fabrication object is repeated five times and the average thereof is used as the tensile modulus of elasticity.

A test specimen according to ISO 3167 Type 1A regulation preferably has a tensile modulus of elasticity of from 800 to 1,700 MPa at 25 degrees C when the test specimen is manufactured with the resin powder by injection molding and allowed to rest at 200 degrees C for five hours in a nitrogen atmosphere. The temperature of the test specimen is 25 degrees C at the measuring of the tensile modulus of elasticity. When a solid freeform fabrication object formed with a resin powder for solid freeform fabrication is left in a high temperature environment, annealing effect is achieved and crystalline orientation is promoted. If a solid freeform fabrication object is left in a high temperature environment (annealed) and crystalline-oriented, the elasticity of the solid freeform fabrication object rises, which prevents the solid freeform fabrication object from distorting. When the tensile modulus of elasticity after annealing is 800 to 1,700 MPa, a solid freeform fabrication object striking a balance between tensile strength and deflection is obtained.

The resin powder for solid freeform fabrication is suitably used in the powder bed fusion (PBF) method. It is preferable that the resin powder for solid freeform fabrication have a suitable particle size, particle size distribution, heat transfer, melt viscosity, bulk density, flowability, melting temperature, and recrystallization temperature. The bulk density of the resin powder for solid freeform fabrication preferably has a large aerated apparent density to promote the degree of laser sintering in the PBF method. It is preferably 0.35 /mL or greater, more preferably 0.40 g/mL or greater, and furthermore preferably 0.50 g/mL or greater. The resin powder for solid freeform fabrication may be formulated by externally adding additives such as a fluidizer to obtained resin particles to secure flowability.

Toughening Agent

A toughening agent is added to mainly enhance the strength of a solid freeform fabrication object and contained as a filler. As the toughening agent, glass filler, glass bead, carbon fiber, aluminum balls, and articles listed in the pamphlet of WTO 2008/057844 are used. These can be used alone or in combination and may be contained in a resin.

Anti-oxidant

Specific examples of the antioxidant include, but are not limited to, metal inactivators such as hydrazide-based agents and amide-based agents, radical scavengers such as phenol-based (hindered phenol-based) agents and amino-based agents, peroxide decomposers such as phosphate-based agents and sulfur-based agents, and ultraviolet absorbents such as triadine-based agents. These can be used alone or in combination. In particular, the combinational use of a radical scavenger and a peroxide decomposer is effective.

The proportion of antioxidant in the total of the resin powder for solid freeform fabrication is preferably from 0.05 to 5 percent by mass, more preferably from 0.1 to 3 percent by mass, and furthermore preferably from 0.2 to 2 percent by mass. When the proportion is within the range specified above, heat deterioration can be prevented and the resin powder used for fabrication but not for the solid freeform fabrication object can be reused. In addition, discoloration caused by heat can be prevented.

Fluidizer

Inorganic particles including oxides such as silica, titania, alumina, zinc oxide can be used as fluidizers that impart flowability to resin particles. Organic particles such as acrylic resins, melamine resins, and benzoguanamine resins can be also used as fluidizers. Such additives have a particle diameter of from 7 to 300 nm. One serves as a lubricant and others prevent agglomeration between particles. These additives may be surface-treated. Such surface treatment includes hydrophobization such as HMDS and charging treatment such as amine treatment or fluorine treatment.

Device for Fabricating Solid Freeform Fabrication Object

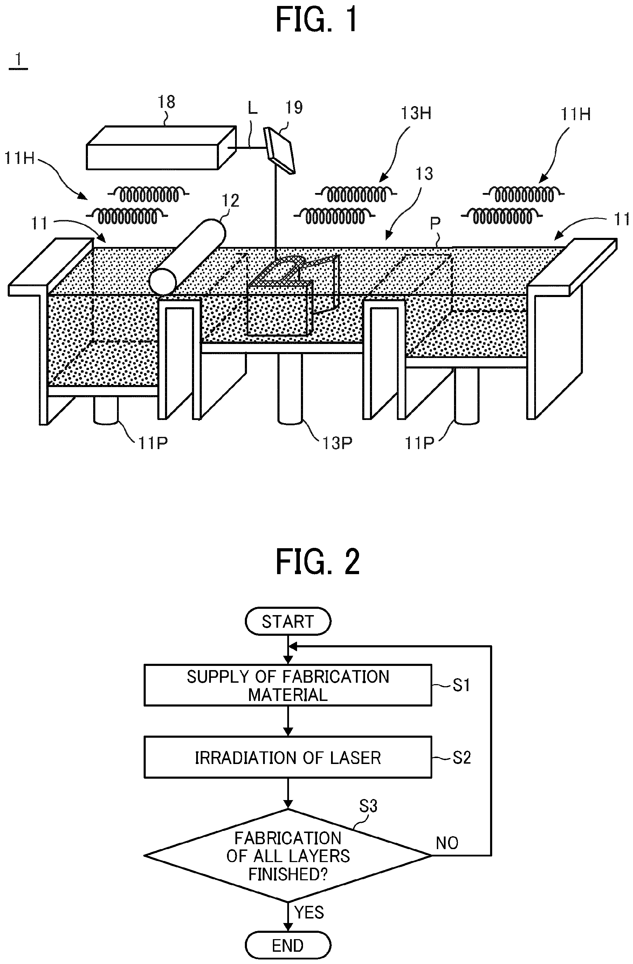

A device for fabricating a solid freeform fabrication object from the resin powder for solid freeform fabrication is described with reference to FIG. 1. FIG. 1 is a schematic diagram illustrating an example of the device for fabricating a solid freeform fabrication object.

As illustrated in FIG. 1, a fabrication device 1 includes a supply tank 11, a roller 12 as a recoater, a laser scanning space 13, an electromagnetic irradiation source 18, a reflection mirror 19, and heaters 11H and 13H.

The supply tank 11 is an example of an accommodating device that accommodates a resin powder P for solid freeform fabrication as a fabrication material.

The roller 12 is an example of a device for supplying the resin powder P accommodated in the supply tank 11 to the laser scanning space 13. The laser scanning space 13 is where a laser L scans as electromagnetic rays. A powder layer having a predetermined thickness is formed with the roller 12, the electromagnetic irradiation source 18 emits the laser L as electromagnetic radiation.

The reflection mirror 19 reflects the laser L emitted by the electromagnetic irradiation source 18 to a predetermined position in the laser scanning space 13. The electromagnetic irradiation source 18 and the reflection mirror 19 are one example of the laser irradiators. The reflection surface of the reflection mirror 19 moves in response to the three-dimensional (3D) data while the electromagnetic irradiation source 18 emits the laser L. The 3D data refers to each cross section obtained by slicing a 3D model with a predetermined interval. A predetermined layer shown by the 3D data in the laser scanning space 13 is selectively exposed to the laser L by changing the reflection angle of the laser L. The resin powder positioned at the exposure position to the laser L melts and sinters to form a fabrication layer. That is, the electromagnetic irradiation source 18 serves as a layer forming device to form each layer of a fabrication object from the resin powder P. The heaters 11H and 13H respectively heat the resin powder P in the supply tank 11 and the resin powder P accommodated in the laser scanning space 13.

In addition, the supply tank 11 and the laser scanning space 13 of the solid freeform fabrication device 1 respectively includes pistons 11P and 13P. The pistons 11P and 13P respectively move the supply tank 11 and the laser scanning space 13 up or down along the lamination direction of a fabrication object at the completion of layer fabrication. Due to this, fresh resin powder P for use in fabrication of a layer can be supplied from the supply tank 11 to the laser scanning space 13.

The fabrication device 1 may change the exposure point of laser L by the reflection mirror 19 to selectively melt the resin powder P. The resin powder P is applicable to fabrication devices employing selective mask sintering (SMS) methods and high speed sintering (HSS). In the SMS method, for example, the resin powder P is partially masked by a shielding mask and the unmasked portion is exposed to electromagnetic rays such as infrared rays so that the resin powder P is selectively melted to obtain a fabrication object. In the case of using the SMS methods, the resin powder P preferably contains at least one of a heat absorbent to reinforce infrared absorbency, dark material, or other substances. Preferred examples of the heat absorbent or the dark material include, but are not limited to, carbon fiber, carbon black, carbon nano tube, and cellulose nano fiber. In the HSS methods, a solution for fabrication containing a radioactive energy absorbent is discharged and radio active energy is applied to the fabrication area in a powder layer to fuse the resin powder P.

Method of Manufacturing Solid Freeform Fabrication Object

The method of manufacturing (fabricating) a solid freeform fabrication object with a resin powder for solid freeform fabrication is described with reference to FIG. 2. FIG. 2 is a flowchart illustrating an example of the method of fabricating a solid freeform fabrication obj ect.

As illustrated in Step 1, the resin powder P as a fabrication material is supplied to form a layer (S1). The resin powder P as the fabrication material is supplied from the supply tank 11 to the laser scanning space 13 and the roller 12 flattens the supplied resin powder P. A powder layer corresponding to an amount of a layer is thus formed (layer forming).

As illustrated in Step 2, the fabrication material supplied is exposed to laser beams (Step 2). The reflection surface of the reflection mirror 19 moves based on the fabrication data for the predetermined layer and the electromagnetic irradiation source 18 emits laser beams. Due to the exposure to the laser beam L, the resin powder P positioned corresponding to the pixel indicated by the data for the predetermined layer melts in the corresponding powder layer. The resin melted at the exposure to the laser beam L solidifies, thereby forming a fabrication layer corresponding to an amount of a layer.

Next, as illustrated in Step 3, whether all the layers are fabricated is determined. Because the fabrication data includes data for multiple layers, whether fabrication relating to the data for all the layers is finished is determined. If all is complete (Yes at Step 3), the fabrication is finished. If not all fabrication is finished (No at Step 3), the supply tank 11 and the laser scanning space 13 are moved up or down along the lamination direction of the fabrication object. Then, the process returns to Step 1. The supplying (or layer forming) (Step 1) and the melting (laser irradiation) (Step 2) are repeated to laminate fabrication layers to fabricate a solid freeform fabrication object. The heaters 11H and 13H may respectively heat the resin powder P in the supply tank 11 and the resin powder P in the laser scanning space 13 in Step 1 and Step 2.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Synthesis of Resin

Synthetic Example 1

Polybutylene terephthalate (PBT) resin was continuously manufactured through esterification in an esterification reaction tank and polycondensation in a polycondensation reaction tank. Polytetramethylene glycol (PTMG 2000, manufactured by Mitsubishi Engineering-Plastics Corporation) at 5.0 parts, 1.4-butanediol at 5.0 parts, terephthalic acid at 5.0 parts, and dimethyl terephthalate at 5.0 parts were used as polymerization materials. A titanium compound having a chelate coordinate is used as an esterification catalyst in the esterification and directly added to the liquid phase in the esterification reaction tank. The polymerization materials were esterified under 50 kPa at 205 degrees C for five hours. The esterified product was subjected to polycondensation under 5 kPa at 230 degrees C for five hours during stirring.

Synthesis Examples 2 to 13

Resins of Synthesis Examples 2 to 13 were manufactured in the same manner as in Synthesis Example 1 except that the alcohol component and the acid component and the mixing ratio were changed as shown in Table 1.

Table 1

| | Copolymer component | | | | |
|---|---|---|---|---|---|
| | Alcohol component (parts by mass) | | Acid component (parts by mass) | | |
| | Polytetramethylene glycol | 1,4-butane diol | Isophthalic acid | Terephthalic acid | Dimethyl terephthalate |
| Synthesis Example 1 | 5.0 | 5.0 | | 5.0 | 5.0 |
| Synthesis Example 2 | 10.0 | 10.0 | | 10.0 | 10.0 |
| Synthesis Example 3 | 15.0 | 15.0 | | 15.0 | 15.0 |
| Synthesis Example 4 | 5.0 | | 5.0 | | |
| Synthesis Example 5 | 15.0 | | 15.0 | | |
| Synthesis Example 6 | 3.0 | 3.0 | | 3.0 | 3.0 |
| Synthesis Example 7 | 18.0 | 18.0 | | 18.0 | 18.0 |
| Synthesis Example 8 | 2.0 | 2.0 | | 2.0 | 2.0 |
| Synthesis Example 9 | 18.5 | 18.5 | | 18.5 | 18.5 |
| Synthesis Example 10 | 10.0 | 10.0 | | 10.0 | 10.0 |
| Synthesis Example 11 | | 10.0 | 10.0 | | |
| Synthesis Example 12 | 10.0 | | 10.0 | | |
| Synthesis Example 13 | 3.0 | 3.0 | | 3.0 | 3.0 |

Manufacturing Example of Resin Powder for Solid Freeform Fabrication

Example 1

The PBT resin synthesized in Synthesis Example 1 was melted at 30 degrees C higher than the melting point during stirring to obtain a resin solution for solid freeform fabrication. The resin solution was drawn into a fibrous form by an extruder (manufactured by The Japan Steel Works, LTD.) having a nozzle having a circular form. The number of the fibrous resin out of the nozzle was set to 60. The resin was extended to a factor of five to produce fibrous resins having a fiber diameter of 55 $\mu$m with an accuracy of -4 to 4 $\mu$m. Next, the fiber was cut to a length of 55 $\mu$m using a cutting machine (NJ series 1200 type, manufactured by OGINO SEIKI CO., LTD.) employing the straw cutter method to obtain resin particles as the resin powder for solid freeform fabrication. The resin particle, which was observed by a scanning electron microscope (S4200, manufactured by Hitachi, Ltd.) at 300 x magnification after the cutting, was substantially cylindrical.

Measuring of Melting Point Tm and Crystallization Temperature Tc

The melting point Tm and the crystallization temperature Tc of the obtained resin particle were measured by a differential scanning calorimeter (Discovery DSC 25P, manufactured by TA Instruments) according to ISO 3146 regulation. The measuring method is as follows. The measuring from 50 to 250 degrees C was defined as 1st run and the measuring from 250 to 50 degrees C was defined as temperature falling measuring run in the following description.

Measuring Conditions

- Starting Temperature: 50 degrees C
- Rate of temperature rising: 10 degrees C/min
- Ending temperature: 250 degrees C
- Rate of temperature falling: 10 degrees C/min
- Ending temperature: 50 degrees C

The endothermic peak temperature in the DSC curve of the 1st run plotted by the measuring was defined as the melting point Tm. The Tm was 224.2 degrees C as shown in Table 2. The endothermic peak temperature was extracted by using an analysis software (TA Universal analysis).

The exothermic peak temperature in the DSC curve of the temperature falling measuring run plotted by measuring was defined as the crystallization temperature Tc. The Tc was 192.1 degrees C as shown in Table 2. The exothermic peak temperature was extracted by using an analysis software (TA Universal analysis).

Gradient of Tangent to Curve Constituting Crystallization Peak

The gradient of the tangent to the curve that formed the crystallization peak and was on a higher temperature side than the Tc in the DSC curve of the temperature falling measuring run obtained in Measuring of Melting Point Tm and Crystallization Temperature Tc mentioned above was calculated. The gradient was -0.27 W/g•degrees C as shown in Table 2.

The gradient of the tangent was calculated by using an analysis software TA Universal Analysis of TA Instruments.

Tensile Modulus of Elasticity (Not Heated)

A test specimen according to ISO 3167 Type 1A was manufactured with the resin powder for solid freeform fabrication by injection molding. The test specimen was manufactured by a hand truder (manufactured by TOYO SEIKI KOGYO CO. LTD.)

The tensile modulus of elasticity of the manufactured test specimen was measured at 25 degrees C by a tensile tester (AGS-5kN, manufactured by Shimadzu Corporation) according to ISO 527 regulation. The test speed in the tensile testing was 50 mm/min. The average of the tensile test repeated five times was used as the tensile modulus of elasticity. The tensile modulus of elasticity was 1,600 MPa as shown in Table 2.

Tensile Modulus of Elasticity (Heated)

A test specimen according to ISO 3167 Type 1A was manufactured with the resin powder for solid freeform fabrication by injection molding. The test specimen was manufactured by a hand truder (manufactured by TOYO SEIKI KOGYO CO. LTD.). The manufactured test specimen rest in a 200 degrees C environment for five hours in a nitrogen atmosphere.

The tensile modulus of elasticity of the test specimen after the resting was measured at 25 degrees C by a tensile tester (AGS-5kN, manufactured by Shimadzu Corporation) according to ISO 527 regulation. The test speed in the tensile testing was 50 mm/min. The average of the tensile test repeated five times was used as the tensile modulus of elasticity. The tensile modulus of elasticity was 2,000 MPa as shown in Table 2.

Examples 2 to 8 and Comparative Example 2

The resin particles were obtained as the resin powders for solid freeform fabrication of Examples 2 to 8 and Comparative Example 2 in the same manner as in Example 1 except that the synthetic resins obtained in Synthesis Examples 2 to 8 and 12 were used instead of the synthetic resin of Synthesis Example 1. The particle diameters (fiber diameter) and the forms of the resin particles are shown in Table 2.

The Tm, Tc, gradient of tangent to curve constituting crystallization peak, tensile modulus of elasticity (not heated), and tensile modulus of elasticity (heated) were obtained in the same manner as in Example 1. The results are shown in Table 2.

Examples 9 and 10 and Comparative Examples 1 and 3

The resin pellets of the synthetic resins of Synthesis Examples 9 to 11 and 13 were pulverized in a circulation manner to obtain resin particles as the resin powders for solid freeform fabrication. A LINREX MILL (manufactured by Hosokawa Micron Corporation) having cooled jacket for frost shattering was used as the circular pulverizer. The particle diameters and the forms of the resin particles are shown in Table 2.

The Tm, Tc, gradient of tangent to curve constituting crystallization peak, tensile modulus of elasticity (not heated), and tensile modulus of elasticity (heated) were obtained in the same manner as in Example 1. The results are shown in Table 2.

Comparative Example 4

The resin particle was obtained as the resin powders for solid freeform fabrication of Comparative Example 4 in the same manner as in Example 1 except that the synthetic resin obtained in Synthesis Example 1 was substituted with a procured PBT (NOVADURAN® 5020, manufactured by Mitsubishi Engineering-Plastics Corporation). The particle diameters (fiber diameter) and the forms of the resin particles are shown in Table 2. The PBT resin used in Comparative Example 4 had no structural unit derived from polytetramethylene glycol.

The Tm, Tc, gradient of tangent to curve constituting crystallization peak, tensile modulus of elasticity (not heated), and tensile modulus of elasticity (heated) were obtained in the same manner as in Example 1. The results are shown in Table 2.

Table 2

| | Resin used | Manufacturing method | Property | | |
|---|---|---|---|---|---|
| | | | DSC | | |
| | | | Melting point Tm (degrees C) | Crystallization temperature Tc (degrees C) | Gradient of tangent (W/g•degrees C) |

| | | | | | |
|---|---|---|---|---|---|
| Example 1 | Synthesis Example 1 | Cutting | 224.2 | 192.1 | -0.27 |
| Example 2 | Synthesis Example 2 | Cutting | 223.0 | 189.1 | -0.24 |
| Example 3 | Synthesis Example 3 | Cutting | 218.2 | 183.1 | -0.22 |
| Example 4 | Synthesis Example 4 | Cutting | 224.5 | 191.2 | -0.28 |
| Example 5 | Synthesis Example 5 | Cutting | 218.1 | 184.4 | -0.25 |
| Example 6 | Synthesis Example 6 | Cutting | 226.3 | 194.2 | -0.31 |
| Example 7 | Synthesis Example 7 | Cutting | 215.4 | 181.1 | -0.18 |
| Example 8 | Synthesis Example 8 | Cutting | 227.1 | 196.8 | -0.29 |
| Example 9 | Synthesis Example 9 | Pulverization | 215.5 | 147.8 | -0.22 |
| Example 10 | Synthesis Example 10 | Pulverization | 221.1 | 174.3 | -0.22 |
| Comparative Example 1 | Synthesis Example 11 | Pulverization | 206.8 | 169.2 | -0.13 |

| Comparative Example 2 | Synthesis Example 12 | Cutting | 207.6 | 174.4 | -0.17 |
|---|---|---|---|---|---|
| Comparative Example 3 | Synthesis Example 13 | Pulverization | 252.1 | 201.8 | -0.29 |
| Comparative Example 4 | Procured product | Cutting | 218.0 | 191.8 | -0.29 |

|  | Particle diameter of resin particle (μm) | Form of resin particle | Evaluation of test specimen | |
|---|---|---|---|---|
|  |  |  | Tensile modulus of elasticity (not heated) (MPa) | Tensile Modulus of Elasticity (Heated) (MPa) |
| Example 1 | 55 | Substantially cylindrical | 1600 | 2000 |
| Example 2 | 55 | Substantially cylindrical | 1100 | 1600 |
| Example 3 | 56 | Substantially cylindrical | 700 | 1200 |
| Example 4 | 53 | Substantially cylindrical | 1800 | 2200 |
| Example 5 | 55 | Substantially cylindrical | 450 | 900 |
| Example 6 | 52 | Substantially cylindrical | 1900 | 2500 |
| Example 7 | 56 | Substantially cylindrical | 500 | 750 |

| | | | | |
|---|---|---|---|---|
| Example 8 | 58 | Substantially cylindrical | 2200 | 2700 |
| Example 9 | 55 | Irregular | 400 | 650 |
| Example 10 | 52 | Irregular | 850 | 1100 |
| Comparative Example 1 | 57 | Irregular | 2800 | 3200 |
| Comparative Example 2 | 59 | Substantially cylindrical | 1800 | 2000 |
| Comparative Example 3 | 55 | Irregular | 900 | 1500 |
| Comparative Example 4 | 55 | Substantially cylindrical | 1630 | 2600 |

Manufacturing (Fabrication) of Solid Freeform Fabrication Object

The resin powder for solid freeform fabrication obtained was stored at 27 degrees C and a humidity of 80 percent RH for one week. A solid freeform fabrication object was then manufactured by an SLS type fabrication device (AM S5500P, manufactured by Ricoh Company Ltd.) with the stored resin powder for solid freeform fabrication. The setting conditions were: average layer thickness of 0.1 mm, a laser power of from 10 to 150 W, a laser scanning space of 0.1 mm, and a bed temperature of -3 degrees C below the melting point. As the solid freeform fabrication object, ISO (International Organization for Standardization) 3167 Type 1A multi-purpose canine bone-like test specimen (specimen has a center portion of a length of 80 mm, a thickness of 4 mm, and a width of 10 mm) was prepared.

Surface Property (Orange Peel Property)

The surface of the obtained solid freeform fabrication object was visually checked, observed with an optical microscope, and subject to organoleptic test. In the organoleptic test, the sample was touched by hands and the surface property, in particular smoothness, was evaluated from the tactile impression. These results were collectively checked to evaluate the surface property (orange peel property) based on the following evaluation criteria. The results are shown in Table 3.

Evaluation Criteria

A: Very smooth surface with no annoying rough portion or coarse surface
B: No problem about smoothness on surface, and roughness and coarse surface tolerable
C: Surface not smooth with clearly visible rough portion and coarse surface
D: Hooked on surface and many defects such as roughness and distortion of surface recognized

Tensile Strength and Tensile Strain

The obtained solid freeform fabrication objects were subjected to tensile testing according to ISO 527. The tester used was AGS-5kN (manufactured by Shimadzu Corporation). The test speed in the tensile testing was 50 mm/min. The tensile test was repeated five times and the average of the measured maximum point tensile strength was defined as the tensile strength and the average of the strain at the maximum point was defined as the tensile strain. The tensile strength and the tensile strain were evaluated according to the following evaluation criteria. The results are shown in Table 3. Strain is represented by the following relationship: (final length - initial length)/initial length $\times$ 100

Evaluation on Tensile Strength

A: Tensile strength is 50 MPa or greater
B: Tensile strength is from 35 to less than 50 MPa
C: Tensile strength is from 20 to less than 35 MPa
D: Tensile strength is less than 20 MPa

Evaluation of Tensile Strain

A: Tensile strain is 10 percent or greater
B: Tensile strain is 5 to less than 10 percent
C: Tensile strain is 3 to less than 5 percent
D: Tensile strain is less than 3 percent

Load Deflection

The obtained solid freeform fabrication objects were subjected to load deflection testing according to ISO 75-1 and 75-2. The test started in a state where the center portion of the solid freeform fabrication object placed in a heated bath was under a bending load of 1.80 MPa. The test conditions were as follows.

Test starting temperature: 30 degrees C
Temperature rising speed: 120 degrees C/hour
Warm-up time: 5 minutes.

The temperature was raised at a constant rate and measured when the deformation of the solid freeform fabrication object reached 0.34 mm. The load deflection testing was repeated three times and the average thereof was defined as the load deflection temperature to evaluate the solid freeform fabrication object on load deflection based on the following evaluation criteria. The results are shown in Table 3.

Evaluation Criteria

A: Load deflection temperature was 90 degrees C or higher
B: Load deflection temperature was 80 to lower than 90 degrees C
C: Load deflection temperature was 70 to lower than 80 degrees C
D: Load deflection temperature was lower than 70 degrees C

Table 3

| | Surface property | Tensile strength (MPa) | Evaluation | Tensile distortion (percent) | Evaluation |
|---|---|---|---|---|---|
| Example 1 | B | 45.5 | B | 5.8 | B |
| Example 2 | A | 47.8 | B | 7.2 | B |
| Example 3 | A | 60.4 | A | 9.6 | B |
| Example 4 | B | 44.9 | B | 5.2 | B |
| Example 5 | A | 60.8 | A | 12.8 | A |
| Example 6 | B | 41.8 | B | 4.6 | C |
| Example 7 | A | 71.4 | A | 15.3 | A |
| Example 8 | B | 40.6 | B | 4.3 | C |
| Example 9 | B | 71.0 | A | 17.7 | A |
| Example 10 | A | 52.1 | A | 10.5 | B |
| Comparative Example 1 | C | 38.1 | B | 1.6 | D |
| Comparative Example 2 | A | 65.8 | A | 5.8 | B |
| Comparative Example 3 | D | 21.1 | D | 7.7 | B |
| Comparative Example 4 | D | 57.0 | A | 4.1 | C |

| | Load deflection (degrees C) | Evaluation |
|---|---|---|
| Example 1 | 98.8 | A |

| Example 2 | 93.5 | A |
|---|---|---|
| Example 3 | 89.1 | B |
| Example 4 | 101.1 | A |
| Example 5 | 97.5 | A |
| Example 6 | 99.2 | A |
| Example 7 | 81.1 | B |
| Example 8 | 100.3 | A |
| Example 9 | 79.6 | C |
| Example 10 | 90.1 | A |
| Comparative Example 1 | 63.1 | D |
| Comparative Example 2 | 68.3 | D |
| Comparative Example 3 | 100.1 | B |
| Comparative Example 4 | 107.2 | A |

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1.  A resin powder for solid freeform fabrication comprising:

    polyester-based resin particles comprising a polyester-based resin having a structural unit derived from polytetramethylene glycol,
    wherein the polyester-based resin particles have a melting point Tm higher than 215 degrees C and equal to or lower than 250 degrees C.

2.  The resin powder according to claim 1, wherein a proportion of the structural unit derived from polytetramethylene glycol in a total content of structural units constituting the polyester-based resin is from 1.0 to 20.0 mol percent.

3.  The resin powder according to claim 1 or 2, wherein the polyester-based resin further comprises a structural unit derived from isophthalic acid.

4.  The resin powder according to claim 3, wherein a proportion of the structural unit derived from isophthalic acid in a total content of structural units constituting the polyester-based resin is from 1.0 to 20.0 mol percent.

5. The resin powder according to any one of claims 1 to 4, wherein a gradient of a tangent to a curve that forms a crystallization peak and is on a higher temperature side than a crystallization temperature Tc is from -0.30 to -0.20 W/g·degrees C in a differential scanning calorimetry curve of the polyester-based resin particles obtained with a differential scanning calorimeter.

6. The resin powder according to any one of claims 1 to 5, wherein the polyester-based resin particles have a crystallization temperature Tc of from 150 to 195 degrees C.

7. The resin powder according to any one of claims 1 to 6, wherein a test specimen according to ISO 3167 Type 1A regulation has a tensile modulus of elasticity of from 300 to 2,000 MPa at 25 degrees C when the test specimen is manufactured with the resin powder by injection molding.

8. The resin powder according to claim 7, wherein the test specimen has a tensile modulus of elasticity of from 700 to 1,600 MPa at 25 degrees.

9. The resin powder according to any one of claims 1 to 8, wherein a test specimen according to ISO 3167 Type 1A regulation has a tensile modulus of elasticity of from 800 to 1,700 MPa at 25 degrees C when the test specimen is manufactured with the resin powder by injection molding and allowed to rest at 200 degrees C for five hours in a nitrogen atmosphere.

10. The resin powder according to any one of claims 1 to 9, wherein the polyester-based resin particles have a substantially columnar form.

11. A method of manufacturing a resin powder for solid freeform fabrication, the method comprising:

pulverizing a polyester-based resin having a structural unit derived from polytetramethylene glycol to form polyester-based resin particles,
wherein the polyester-based resin particles have a melting point Tm higher than 215 degrees C and equal to or lower than 250 degrees C.

12. A method of manufacturing a solid freeform fabrication object comprising:

forming a layer containing a resin powder by moving the resin powder by a layer forming device;
melting the layer with electromagnetic radiation; and
repeating the forming and the melting,
wherein the resin powder comprises polyester-based resin particles comprising a polyester-based resin having a structural unit derived from polytetramethylene glycol,
wherein the polyester-based resin particles have a melting point Tm higher than 215 degrees C and equal to or lower than 250 degrees C.

# FIG. 1

# FIG. 2

Europäisches
Patentamt

European
Patent Office

Office européen
des brevets

## EUROPEAN SEARCH REPORT

Application Number

EP 20 18 7835

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2020/085912 A1 (DSM IP ASSETS BV [NL]) 30 April 2020 (2020-04-30) * paragraphs [0001], [0016] - [0019], [0022] - [0024], [0152] - [0157], [0201], [0209], [0226]; claims 1,16; examples 12,14; table 2 * ----- | 1-12 | INV. B29C64/153 B29C64/268 B33Y70/00 C08G63/672 |
| X | US 2017/190905 A1 (ARAI SATOSHI [JP] ET AL) 6 July 2017 (2017-07-06) * paragraphs [0001], [0005] - [0011], [0105] - [0106]; claims 1-20 * ----- | 1-12 | |

TECHNICAL FIELDS
SEARCHED      (IPC)

B29C
B33Y
C09J
C08G

The present search report has been drawn up for all claims

| Place of search | Date of completion of the search | Examiner |
|---|---|---|
| The Hague | 3 November 2020 | Bezard, Stéphane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 18 7835

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2020

| Patent document cited in search report | | Publication date | Patent family member(s) | | Publication date |
|---|---|---|---|---|---|
| WO 2020085912 | A1 | 30-04-2020 | NONE | | |
| US 2017190905 | A1 | 06-07-2017 | JP | 6033994 B1 | 30-11-2016 |
| | | | JP | WO2016121013 A1 | 27-04-2017 |
| | | | US | 2017190905 A1 | 06-07-2017 |
| | | | WO | 2016121013 A1 | 04-08-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6033994 B

- JP 2015052254 W